# EUROPEAN PATENT SPECIFICATION

(11) **EP 0 636 520 B1**
(45) Date of publication and mention of the grant of the patent: **02.01.1997**
(21) Application number: 94108607.6
(22) Date of filing: 06.06.1994
(51) Int. Cl.: B60R 16/02, H02H 7/18

(54) **An electronic protection device to counter excessive battery discharge while a motor vehicle is stationary**
Elektronisches Schutzgerät gegen exzessive Batterieentladung bei stehendem Fahrzeug
Appareil de protection électronique pour contrer une décharge excessive de la batterie lorsqu'un véhicule est en stationnement

(30) Priority: 29.07.1993 IT TO930568
(43) Date of publication of application: 01.02.1995
(73) Proprietor: FIAT AUTO S.p.A., 10135 Torino (IT)
(72) Inventor: Di Nunzio, Vittorio, I-10100 Torino (IT)
(74) Representative: Di Francesco, Gianni

(56) References cited:
- EP-A- 0 239 463
- EP-A- 0 276 082
- DE-A- 3 742 312
- DE-A- 4 116 318
- US-A- 4 698 578
- US-A- 5 179 337

## Description

Considering the electrical components on a current motor vehicle, it can be stated that they fall into two categories. The first consists of all the components controlled directly or indirectly by the ignition key and characterized in that there is no power demand on the on board battery if the key is not inserted, assuming that there is no breakdown in the system.

The second includes the components which require a direct power feed from the battery, for example the remote control with its corresponding door locking/unlocking system, electrically slidable seats (with or without data storage), parking lights, internal roof lights, glove compartment and boot lights, boot and tank cap locking/unlocking device, electric clock, car radio, antitheft system, the RAM electronic system and the hazard lights.

The above mentioned components are generally characterized in that they consume momentary or short-lived currents, even of high voltage levels, for the activation of servo-systems, for example door locking/unlocking, while they continually consume low voltage currents of a few milliamperes, or at maximum tens of milliamperes, while in stand-by. Therefore, individually every component has a negligible effect on battery discharge, but when there are many of them and the vehicle is stationary for a long time (weeks or months), then they can cause battery discharge; this is essentially due to the continuous currents consumed by the above mentioned components while in stand-by.

The first consequence of excessive discharge, which the user discovers immediately, is that the engine cannot be started.

The second is that the life of the battery is reduced dramatically, especially if there are repeated and total discharges which require the user to replace the battery in a short time with all the nuisance and cost involved.

Car manufacturers obviously define the maximum consumption limits, with the ignition off, for standard equipments and devices, with the aim of limiting battery discharge whenever the vehicle is stationary, however they have no influence over other products which the user may choose to install, for example the car radio and the antitheft system. Then there are conditions which the user determines of his/her own free will, such as keeping, when the ignition is off, the parking lights on or keeping the car radio on at a high volume; this causes the consumption of a few amperes of current, with easily imaginable consequences for the battery if this situation should continue for a protracted length of time.

There may be cases when an internal light remains on either due to a switch failure or to the user's forgetfulness, for example the glove compartment light or the boot light when the boot is not closed well. In all these cases the battery discharge may be more or less important.

Electric circuits for the control of the battery discharge corresponding to the preamble of claim 1 are known, e.g. from the leading part of the description of US-A-5 179 337.

They comprise relays wired in series or in parallel with the electrical components of a motor vehicle, with the normally open contacts in series with the battery and said electrical components.

While the battery is sufficiently charged to keep the relay activated, it is coupled to the electrical components.

When the voltage drops below a certain value, depending on the electrical characteristics of the relay, the relay drops out, opening the circuit between the battery and the electrical components of the motor vehicle.

This arrangement consumes an inordinate amount of power in the relay coil and moreover, the relays, which are suitable for this purpose, are expensive.

Then, relays tend to lock up and fail to drop out when sufficient power is no longer applied, because of magnetization of the relay components.

Other circuits known from the prior art include solid state components to sense the voltage being applied and to operate a transistor, when the sensed voltage is dropping to a pre-determined value.

However, these electrical circuits use complicated circuitry for sensing voltage and for controlling switches; moreover, they consume excessive power, which shortens the life of the battery and they are subject to failure or damage under abnormal conditions.

US-A-5,179,337 discloses a field-effect transistor (FET), coupled with its gate and source across the terminals of a recheargeable battery and its drain and source forming the connections to the load, in which, if the source to gate voltage exceeds a certain value, the recheargeable battery is coupled to the load and if the voltage supplied by the battery falls below a certain value, the FET ceases to conduct, disconnecting the recheargeable battery from the load.

This electric circuit has low leakage currents and its design is very simple, but it is only suitable for recheargeable batteries and it is not capable of monitoring the current drain of the battery, while the motor vehicle is stationary.

Moreover, the FET always disconnects the battery from the load for all of the types and number of electrical components which are installed on the motor vehicle.

On the contrary, the electronic protection device of the present application operates when the ignition key is disconnected from its inlet, so as to prevent the battery from discharging while the motor vehicle is parked (that is to say, while the motor vehicle is stationary), even though the electric circuits of a vehicle are in function, consuming current continuously, despite they are in a stand-by position (as doors locking/unlocking, car radios, antitheft systems, etc.).

Moreover, the device of this invention has the aim of avoiding the above mentioned occurrences through means capable of monitoring the drain on the battery while the vehicle is stationary, and through means capable of disconnecting the battery should certain established limits be exceeded, thus safeguarding the battery from further discharge, apart from, obviously the inevitable minimum discharge, the so called "self discharge" which all batteries have during non operation. The object of the invention is achieved by the subject-matter of claim 1.

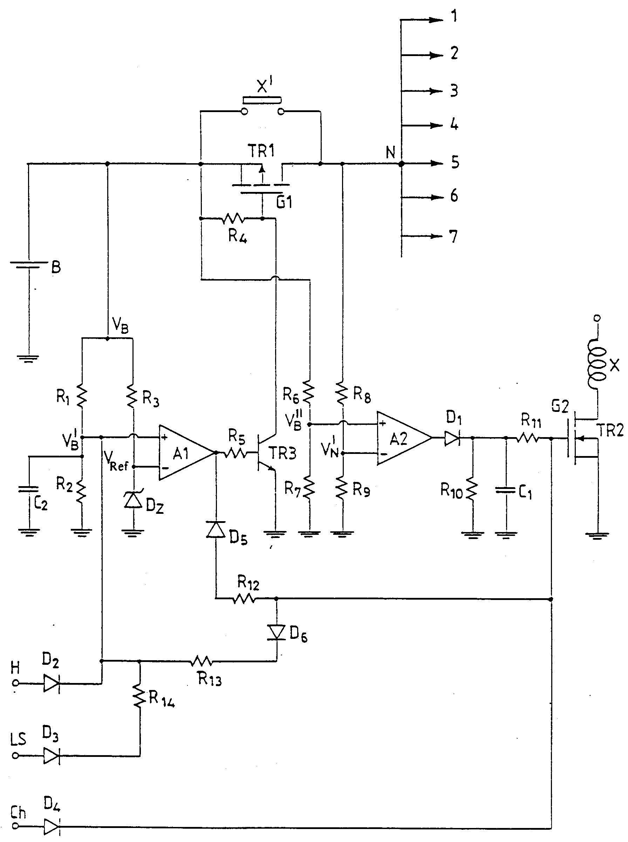

The structural and working characteristics of the device according to this invention will be more clearly understood from the following detailed description which refers to the enclosed drawing in which an electronic circuit of an electronic protection device to counter excessive battery discharge while a vehicle is stationary is shown.

The device according to this invention comprises an electronic circuit capable of detecting the battery no-load voltage, or at least the very low load, while the vehicle is stationary. It is well known that the no-load voltage of a battery is sufficiently indicative of the battery's charge condition, even though it needs to be integrated with other parameters such as the electrolyte temperature and decantation time. For the aims indicated here, on the basis of much experimental findings, the battery voltage results has been considered suitable to be monitored for activating the intervention of the device in question.

This embodiment provides a feed line for all the previously listed loads, with the exception of the hazard lights and the antitheft system for reasons which will be explained later on, said line comprises a disconnection system which is activated whenever the battery reaches an established discharge level, defined on the basis of the voltage readings at its terminals.

With reference to the above mentioned figure, which shows, by way of example only, an electronic circuit capable of realizing a device according to the present invention, the operation of said device is described.

The device, in essence, comprises a relay (X) controlled by an initial first transistor TR2 which can suitably be of the N channel MOS type, since they are semiconductors which have a high gate impedance G2. This allows the conduction status to be maintained for long periods of time, without the need to use large capacitors, as will be described later.

The contact X' of said relay X is located between the battery B and the feed node N of the whole series of loads indicated by the numbers from 1 to 7 which are to be controlled by the device, with the exception of the hazard lights and the antitheft system. These loads are the parking lights, the car radio, the roof lights, the electric clock, the electric seats, the door locking remote control, RAM electronic systems and so on.

In parallel to the above mentioned contact X' a second transistor TR1 is placed, this also could suitably, but not necessarily, be of the MOS type, with a conduction resistance valve ≦ O.5 Ω . As can be deduced from the diagram, the current to the loads on the node N can flow either across the contact X', when it is closed, of the relay X or across the second transistor TR1. The first resistance divider R1, R2, together with the capacitor C2, generates a first voltage value signal V'B which is directly proportional to the voltage VB between the positive and negative terminals of the battery B, while a group of elements, R3, DZ generates a fixed reference voltage VRef, with which the first voltage value signal (V'B) is compared. The diode (Dz) represents a sufficiently precise reference. The signals V'B and VRef are compared at the two inlets of the first comparator A1, the output of which goes to a high level if V'B exceeds VRef. In the opposite case it goes to a low level.

A high output level from the first comparator A1 can command, across a resistance R5, a third transistor TR3 which in its turn can command, by means of a resistance R4, the gate G1 of the second transistor TR1, which here is a P channel MOS transistor. Through the above mentioned electronic chain, the high output from the first comparator A1 determines the conducting state of the second transistor TR1. Vice versa low output from the first comparator A1 causes the locking of the second transistor TR1. From the conceptual point of view, the use of the relay X would not be necessary if the second transistor TR1 were capable of feeding, just by itself, every kind of load connected to the node N. Here it should be noted that among the downstream users there is, for example, the door locking system, which, every time it is activated, consumes a current of about 20A for about 1 second.

Therefore the second transistor TR1 would have to have dimensions suitable for these maximum loads and its cost would clearly be higher than that of a relay. For this reason, a sufficiently economic device is proposed here, which can deliver low value currents, up to a maximum of 2A, through the second transistor TR1, while for larger currents it uses the relay X.

The working logic for the intervention of the relay X is as follows: every time that there is a burst of current exceeding about 2A, the voltage drop across the second transistor TR1 increases. The voltages upstream and downstream from the second transistor TR1 are detected by means of the respective second and third resistance dividers (R6, R7 and R8, R9) which generate voltage signals V''B and V'N which are directly proportional to the above mentioned voltages. In particular, said dividers are of such a size that if the voltage drop across the second transistor is low or non existent, the signal V'N prevails over the signal V''B.

When, on the other hand, said voltage drop exceeds a certain value, around 1V, the signal V'N is lower than V''B. The comparison between the signals V'N and V''B is made at the inlets of a second comparator A2, so that its output rises to a high level every time that V''B exceeds V'N, that means there is an appreciable current across the second transistor TR1. If this occurs, the second comparator A2, by means of a group of elements D1, R10, C1, R11, can command the gate G2 of the first transistor TR2, and can cause the excitation of relay X and the closing of the corresponding contact X'. In these conditions all the current can circulate through said contact, thus relieving the second transistor TR1 from this task.

The presence of the group D1, R10, C1, R11 has the aim of maintaining a high level value at the gate G2 of the first transistor TR2 for about a minute, even though, in the meantime, the output of the second comparator A2 has gone to a low level. This, in fact, happens at the same moment in which the contact X' closes, thus causing the elimination of the voltage drop across the second transistor TR1.

During the time that the first transistor TR2 is held in its conducting state and the relay X is therefore excited, which in effect is determined by the fact that some of the loads are consuming an appreciable amount of current from the battery, the signal V'B is suitably increased by means of a group of elements D6, R13. In fact it gives different results in detecting the battery voltage when the battery is delivering a moderate or strong current than detecting it when the battery is at rest; under the same load conditions, in the first case the voltage is slightly lower. For this reason a compensation quota is applied by means of the group R11, D6, R13. In the enclosed diagram a further group of elements D5, R12 is shown, which has the principal scope of eliminating the command from the gate G2 of the first transistor TR2, by means of the first comparator A1, if at a low level, and at the same time of creating a small hysteris, by means of the group D6, R13, in order to avoid oscillations of the first comparator A1.

The inlets for the hazard lights H, the parking lights LS and the dashboard (ignition) key CH are also shown in the diagram.

The key CH causes permanent excitation of the relay X, whatever the condition in which the circuit is operating. In fact, the key CH voltage causes a high signal to be sent through diode D4 to the gate G2 of the first transistor TR2 and thus causes the excitation of relay X. The emergency device is not among the loads connected to the node N, but is instead connected to the battery B upstream from the device. In fact, it is not considered convenient to subject this kind of load to the device control due to the fact that this is a safety device activated at will by the user with and that it must remain activated even until the battery B is completely discharged. The corresponding inlet H of the circuit keeps the first comparator A1 permanently and forcibly out-of-balance, by means of the diode D2, so as to hinder the intervention of the device.

Finally there is an inlet for the parking lights LS which, by means of the group D3, R14, suitably compensates the signal V'B for the already said reasons due to the fact that in the opposite case, when there is a significant current delivered by the battery, the signal V'B would be notably lower than the signal obtained when the battery is at rest.

Among the loads connected to the the node N which, so far, have been placed under the disconnection device, it is wise not to include the antitheft system so that its vehicle surveillance function can be ensured even at the risk of excessive battery discharge.

It should be noted that the device according to this invention operates only when the key is removed, that is to say when the car is parked.

Furthermore it can feed, thanks to the relay, high bursts of current, thus keeping costs down.

This device, furthermore, monitors the battery's charge condition though the voltage on the battery's positive terminal, thus allowing both low and significant consumption equipments such as the car radio / parking lights to be fed; by carrying out suitable signal compensations, until a battery charge condition considered sufficient to start the engine is reached, after said condition the disconnection of the controlled loads takes place.

Said disconnection is obtained by the low level output from the first comparator A1 which, on the one hand provides for the interdiction of the third transistor TR3 and then of the second transistor TR1, and on the other provides for the removal of the command to gate G2 of the first transistor TR2, de-energizing the relay X and thus opening the corresponding contact X'. In this way the connection between the battery and the node N is completely interrupted thus saving the battery from any further discharge.

## Claims

1. An electronic protection device to counter excessive discharge of a car battery (B) by a feed node (N) for a number of electric loads (1-7), belonging to the electrical circuit of a motor vehicle, whereby a relay (X) is provided comprising a contact (X'), which is placed between said battery (B) and said feed node (N) to couple said feed node (N) to said car battery (B),
characterised in that said relay (X) is suitable for being controlled by a first transistor (TR2) of said electronic protection device which also comprises:
• a second transistor (TR1), which is placed between said battery (B) and said feed node (N) and connected in parallel to said contact (X'), said second transistor (TR1) being controlled by
• a third transistor (TR3) which is activated, in its turn, according to the output level of
• a first comparator (A1) capable of comparing a first voltage value (V'B), that is generated by
• a first resistance divider (R1, R2) and that is proportional to the voltage value (VB) of said battery (B), whereby the first comparator (A1) compares the first voltage value (V'B) with a reference voltage value (VRef), upstream and downstream voltage levels of said second transistor (TR1) being detectable by means of
• corresponding second and third resistance dividers (R6, R7; R8, R9), capable of generating voltage signals (V''B, V'N) directly proportional to said voltage levels of said second transistor (TR1) which can be compared by means of
• a second comparator (A2) provided for the control of said first transistor (TR2).

2. A device according to claim 1, characterised in that said first transistor (TR2) and said second transistor (TR1) are MOS transistors.

3. A device according to claim 1, characterised in that said first transistor (TR2) and said second transistor (TR1) are controlled by means of corresponding gates (G2, G1).

4. A device according to claim 1, characterised in that the parking lights are connected with a first inlet (LS) of said device, a suitable group of electrical elements (D3, R14) also being connected with said first inlet (LS) to compensate said a notably lower first voltage value (V'B), which is generated by said first resistance divider (R1, R2) when a significant current is drawn by the parking lights.

5. A device according to claim 1, characterised in that an ignition key input is connected with a second inlet (CH) of said device, so that when an ignition key is connected with said second inlet (CH), the voltage existing at said second inlet (CH) causes a permanent excitation of said relay (X).

6. A device according to claim 1, characterised in that an electric circuit for the hazard lights is connected to a third inlet (H) of said device.

7. A device according to claim 1, characterised in that said device monitors the voltage value (VB) of said battery (B) to check the charge status of said battery (B), thus allowing the feeding of various equipments by suitably compensating said first voltage value (V'B), which is generated by said first resistance divider (R1, R2), until a pre-determined value of the voltage (VB) of said battery (B), that is considered sufficient to start the engine of the motor vehicle, is reached.

8. A device according to claim 7, characterised in that, when the voltage value (VB) of said battery (B) reaches said pre-determined value, the disconnection of said feed node (N) of the battery (B) takes place, one of the output levels of said first comparator (A1) being suitable for the interdiction of said third (TR3) and second transistors (TR1) and for the removal of a command signal to said first transistor (TR2), with the subsequent opening of said contact (X') of the relay (X), the opening of said contact (X') causing the disconnection of said feed node (N) from the battery (B).

9. A device according to claims 5 or 7, characterised in that said detection of the voltage value (VB) of said battery (B) is carried out when the motor vehicle is stationary and the ignition key is removed from said second inlet (CH).

## Patentansprüche

1. Elektronische Schutzvorrichtung zum Entgegenwirken gegen die übermäßige Entladung einer Autobatterie (B) durch einen Zufuhrknoten (N) für eine Anzahl von elektrischen Lasten (1-7), die zu dem Stromkreis eines Motorfahrzeugs gehören, wobei ein Relais (X) vorgesehen ist, welches einen Kontakt (X') umfaßt, der zwischen der Batterie (B) und dem Zufuhrknoten (N) angeordnet ist, um den Zufuhrknoten (N) mit der Autobatterie (B) zu verbinden,
dadurch gekennzeichnet,
daß das Relais (X) dazu geeignet ist, von einem ersten Transistor (TR2) der elektronischen Schutzvorrichtung gesteuert zu werden, die zusätzlich noch folgendes umfaßt:
• einen zweiten Transistor (TR1), der zwischen der Batterie (B) und dem Zufuhrknoten (N) angeordnet und zu dem Kontakt (X') parallelgeschaltet ist, wobei der zweite Transistor (TR1) durch
• einen dritten Transistor (TR3) gesteuert wird, der wiederum je nach dem Ausgangsniveau
• eines ersten Vergleichers (A1) aktiviert wird, der einen ersten Spannungswert (V'B), der durch
• einen ersten Widerstand-Teiler (R1, R2) erzeugt wird und proportional zu dem Spannungswert (VB) der Batterie (B) ist, mit einem Referenzspannungswert (VRef) vergleichen kann, und wobei die oberstromigen und unterstromigen Spannungsniveaus des zweiten Transistors (TR1) durch
• entsprechende zweite and dritte Widerstands-Teiler (R6, R7; R8, R9) ermittelbar sind, die Spannungssignale (V''B, V'N) erzeugen können, die direkt proportional zu den Spannungsniveaus des zweiten Transistors (TR1) sind und die mit Hilfe
• eines zweiten Vergleichers (A2) verglichen werden können, der zur Steuerung des ersten Transistors (TR2) vorgesehen ist.

2. Vorrichtung nach Anspruch 1,
dadurch gekennzeichnet,
daß der erste Transistor (TR2) und der zweite Transistor (TR1) MOS-Transistoren sind.

3. Vorrichtung nach Anspruch 1,
dadurch gekennzeichnet,
daß der erste Transistor (TR2) und der zweite Transistor (TR1) durch entsprechende Gates (G2, G1) gesteuert werden.

4. Vorrichtung nach Anspruch 1,
dadurch gekennzeichnet,
daß die Parklichter mit einem ersten Einlaß (LS) der Vorrichtung verbunden sind, wobei eine geeignete Gruppe von elektrischen Elementen (D3, R14) auch mit dem ersten Einlaß (LS) verbunden ist, um einen erheblich niedrigeren Spannungswert (V'B) auszugleichen, der durch den ersten Widerstands-Teiler (R1, R2) erzeugt wird, wenn die Parklichter bedeutend viel Strom ziehen.

5. Vorrichtung nach Anspruch 1,
dadurch gekennzeichnet,
daß eine Zündschlüssel-Eingabe mit einem zweiten Einlaß (CH) der Vorrichtung verbunden ist, so daß die am zweiten Einlaß (CH) bestehende Spannung eine permanente Erregung des Relais (X) bewirkt, wenn ein Zündschlüssel mit dem zweiten Einlaß (CH) verbunden wird.

6. Vorrichtung nach Anspruch 1,
dadurch gekennzeichnet,
daß ein Stromkreis für die Gefahrenbeleuchtung mit einem dritten Einlaß (H) der Vorrichtung verbunden ist.

7. Vorrichtung nach Anspruch 1,
dadurch gekennzeichnet,
daß die Vorrichtung den Spannungswert (VB) der Batterie (B) überwacht, um den Ladezustand der Batterie (B) zu überprüfen, und dadurch die Speisung von verschiedenen Ausrüstungsteilen durch geeignetes Ausgleichen des ersten Spannungswertes (V'B) erlaubt, der durch den ersten Widerstands-Teiler (R1, R2) erzeugt wird, bis ein vorher bestimmter Wert der Spannung (VB) der Batterie (B) erreicht ist, der als genügend angesehen wird, um den Motor des Fahrzeugs zu starten.

8. Vorrichtung nach Anspruch 7,
dadurch gekennzeichnet,
daß die Verbindung des Zufuhrknotens (N) der Batterie unterbrochen wird, wenn der Spannungswert (VB) der Batterie (B) einen vorher bestimmten Wert erreicht, wobei eines der Ausgangsniveaus des ersten Vergleichers (A1) für das Unterdrücken des dritten (TR3) und zweiten Transistors (TR1) und für die Entfernung eines Kommandosignals des ersten Transistors (TR2) geeignet ist, worauf sich in der Folge der Kontakt (X') des Relais (X) öffnet und die Öffnung des Kontaktes (X') die Unterbrechung des Zufuhrknotens (N) von der Batterie (B) bewirkt.

9. Vorrichtung nach Anspruch 5 oder 7,
dadurch gekennzeichnet,
daß die Ermittlung des Spannungswertes (VB) der Batterie durchgeführt wird, wenn das Fahrzeug steht und der Zündschlüssel von dem zweiten Einlaß (CH) entfernt wird.

## Revendications

1. Dispositif de protection électronique destiné à s'opposer à la décharge excessive d'une batterie de voiture (B), depuis un noeud d'alimentation (N) destiné à un certain nombre de charges électriques (1 à 7), appartenant au circuit électrique d'un véhicule motorisé, dans lequel est prévu un relais (X) comprenant un contact (X'), qui est placé entre ladite batterie (B) et ledit noeud d'alimentation (N) afin de coupler ledit noeud d'alimentation (N) à ladite batterie de voiture (B),
caractérisé en ce que ledit relais (X) est approprié pour être commandé par un premier transistor (TR2) dudit dispositif de protection électronique qui comprend également:
• un second transistor (TR1), qui est placé entre ladite batterie (B) et ledit noeud d'alimentation (N) et est relié en parallèle audit contact (X'), ledit second transistor (TR1) étant commandé par
• un troisième transistor qui est activé à son tour, conformément au niveau de sortie d'
• un premier comparateur (A1) capable de comparer une première valeur de tension (V'B), qui est générée par
• un premier diviseur à résistances (R1, R2) et qui est proportionnelle à la valeur de tension (VB) de ladite batterie (B), d'où il résulte que le premier comparateur (A1) compare la première valeur de tension (V'B) à une valeur de tension de référence (VRef), les niveaux de tension en amont et en aval dudit second transistor (TR1) pouvant être détectés au moyen de
• second et troisième diviseurs à résistances correspondants (R6, R7 ; R8, R9), capables de générer des signaux de tension (V''B, V'N) directement proportionnels auxdits niveaux de tension dudit second transistor (TR1), qui peuvent être comparés au moyen d'
• un second comparateur (A2) prévu pour la commande dudit premier transistor (TR2).

2. Dispositif selon la revendication 1, caractérisé en ce que le premier transistor (TR2) et le second transistor (TR1) sont des transistors métal oxyde semiconducteurs (MOS).

3. Dispositif selon la revendication 1, caractérisé en ce que le premier transistor (TR2) et le second transistor (TR1) sont commandés au moyen de grilles correspondantes (G2, G1).

4. Dispositif selon la revendication 1, caractérisé en ce que les feux de stationnement sont reliés à une première entrée (LS) dudit dispositif, un groupe approprié d'éléments électriques (D3, R14) étant également relié à ladite première entrée (LS) afin de compenser la première valeur de tension notablement inférieure (V'B), qui est générée par le premier diviseur à résistances (R1, R2) lorsqu'un courant significatif est consommé par les feux de stationnement.

5. Dispositif selon la revendication 1, caractérisé en ce qu'une entrée de clé de contact est reliée à une seconde entrée (CH) dudit dispositif, de sorte que lorsqu'une clé de contact est reliée à la seconde entrée (CH), la tension existant au niveau de ladite seconde entrée (CH) provoque une excitation permanente du relais (X).

6. Dispositif selon la revendication 1, caractérisé en ce qu'un circuit électrique destiné aux feux de sécurité est relié à une troisième entrée (H) dudit dispositif.

7. Dispositif selon la revendication 1, caractérisé en ce que ledit dispositif surveille la valeur de tension (VB) de la batterie (B) afin de contrôler l'état de charge de ladite batterie (B), en permettant ainsi l'alimentation de divers équipements en équilibrant de façon appropriée la première valeur de tension (V'B), qui est générée par le premier diviseur à résistances (R1, R2), jusqu'à ce que l'on atteigne une valeur prédéterminée de la tension (VB) de ladite batterie (B), qui est considérée comme suffisante pour démarrer le moteur du véhicule motorisé.

8. Dispositif selon la revendication 7, caractérisé en ce que, lorsque la valeur de tension (VB) de la batterie (B) atteint la valeur prédéterminée, la déconnexion du noeud d'alimentation (N) de la batterie (B) a lieu, l'un des niveaux de sortie du premier comparateur (A1) étant approprié au blocage des troisième (TR3) et second (TR1) transistors et à l'élimination d'un signal de commande vers le premier transistor (TR2), suivi d'une ouverture du contact (X') du relais (X), l'ouverture dudit contact (X') provoquant la déconnexion dudit noeud d'alimentation (N) de la batterie (B).

9. Dispositif selon les revendications 5 ou 7, caractérisé en ce que la détection de la valeur de tension (VB) de la batterie (B) est effectuée lorsque le véhicule motorisé est stationné et que la clé de contact est enlevée de la seconde entrée (CH).
